Europäisches Patentamt

European Patent Office

Office européen des brevets

(19)

(11) Veröffentlichungsnummer: **0 085 982**
A2

(12) **EUROPÄISCHE PATENTANMELDUNG**

(21) Anmeldenummer: **83101170.5**

(22) Anmeldetag: **08.02.83**

(51) Int. Cl.³: **H 02 M 7/537**

(30) Priorität: **09.02.82 DE 3204400**

(43) Veröffentlichungstag der Anmeldung:
**17.08.83 Patentblatt 83/33**

(84) Benannte Vertragsstaaten:
**AT BE CH DE FR GB IT LI LU NL SE**

(71) Anmelder: **E.M. Heinkel KG**
**Bossler Strasse 45**
**D-7317 Wendlingen(DE)**

(72) Erfinder: **Schmiga, Hubert**
**Liegnitzer Strasse 37**
**D-7015 Korntal-Münchingen 1(DE)**

(74) Vertreter: **Thul, Leo, Dipl.-Phys.**
**Kurze Strasse 8 Postfach 300 929**
**D-7000 Stuttgart 30(DE)**

(54) **Wechselrichter.**

(57) Gegenstand der Erfindung ist ien Wechselrichter. Wechselrichter dienen dazu, Gleichspannung in Wechselspannung umzuwandeln, und werden hauptsächlich als Notstromaggregate eingesetzt. Es gibt verschiedene Typen von Wechselrichter; die Erfindung bezieht sich insbesondere auf sogenannte getaktete modulierte Wechselrichter zur Erzeugung einer Sinusspannung.

EP 0 085 982 A2

./...

Fig.1

Wechselrichter

Die Erfindung bezieht sich auf einen statischen Wechselrichter, d.h. auf eine elektrische Schaltungseinrichtung
zur Umwandlung von Gleichstrom in Wechselstrom, insbesondere in sinusförmigen Wechselstrom. Derartige Wechselrichter werden vor allem als Notstromaggregate benötigt
und eingesetzt, um bei Störungen des öffentlichen Netzes
unabhängig zu sein. Sie sind rotierenden Maschinen überlegen, insbesondere seit die geeigneten Leistungstransistoren und Thyristoren zur Verfügung stehen, da nunmehr
eine sehr schnelle Umschaltung von dem Netz auf den Wechselrichter erfolgen kann. Dieses ist insbesondere beim
Einsatz in der Datenverarbeitungstechnik wesentlich.

Die Erfindung bezieht sich insbesondere auf getaktete
Wechselrichter; diese liefern an sich eine Rechteck-
Wechselspannung. Um hieraus eine Sinusspannung zu machen,
benötigt man große L-C-Filter, wobei jedoch der Wirkungsgrad dann meist unter 80 % sinkt.

Es sind auch schon sogenannte getaktete modulierte Wechselrichter für Sinusspannung bekannt geworden, bei denen der
Wirkungsgrad höher ist. (vgl. telecom report 4 (1981) Heft
2, S. 118 - 121). Dabei dient die Takt-Sinusspannung zur
Modulation eines Rechteckgenerators im Sinne einer Pulsbreitenmodulation. Mit der modulierten Ausgangsspannung
wird ein Verstärker gesteuert, an dessen Ausgang eine gleichgerichtete Sinusspannung auftritt; diese muß dann noch durch einen Polwender in die normale Sinusspannung umgewandelt werden, d.h. jede zweite Sinushalbwelle der Verstärkerausgangsspannung wird "umgekippt". Dieses Prinzip wird in allen bekannten Wechselrichtern angewandt, nämlich beide Halbwellen in einer einzigen Schaltung zu erzeugen.

Die vorliegende Erfindung geht von dem Prinzip des getakteten modulierten Wechselrichters aus. Der bekannte Wechselrichter hat jedoch den großen Nachteil, daß zum Schutz der Polwenderbrücke und zur Entzerrung der Ausgangsspannung eine Blindlastkompensation vorgesehen werden muß, wozu ein sehr aufwendiger Blindlastumrichter dient, der die überschüssige Energie in die Batterie zurückspeist.

Unter Beibehaltung des Prinzips des getakteten modulierten Wechselrichters geht die Erfindung nun genau den umgekehrten Weg wie der bekannte Wechselrichter: gemäß der Erfindung werden nämlich die positiven und die negativen Sinushalbwellen der Ausgangsspannung getrennt in voneinander unabhängigen Schaltungsteilen erzeugt und dann zur Sinusschwingung zusammengesetzt. Eine besonders vorteilhafte Weiterbildung der Erfindung ist durch den Anspruch 2 gekennzeichnet.

Diese Lösung vermeidet die Nachteile des bekannten Wechselrichters und bringt eine Reihe von wesentlichen Vorteilen. Durch das getrennte Verarbeiten der beiden Halbwellen ist eine Blindstromkompensation nicht erforderlich, da keine Gefahr besteht, daß Bauelemente (Transistoren) zerstört werden, damit ist dann auch kein komplizierter Blindlastumrichter notwendig.

Da die beiden Schaltungsteile zur Erzeugung der positiven und der negativen Halbwellen immer abwechselnd arbeiten, ist die Erwärmungsverteilung günstiger als bei den bekannten Wechselrichter, so daß man eine kompaktere Bauweise erreichen kann.

Auch die Parallelschaltung mehrerer Wechselrichter, um eine höhere Ausgangsleistung zu erzielen, ist bei dem neuen Lösungsprinzip einfacher und sicherer als bei dem bekannten modulierten Wechselrichter, was einfach durch die vollkommen getrennte Erzeugung der beiden Halbwellen gegeben ist; so braucht z.B. der Sinusgeber nur eingangsseitig parallel zu arbeiten.

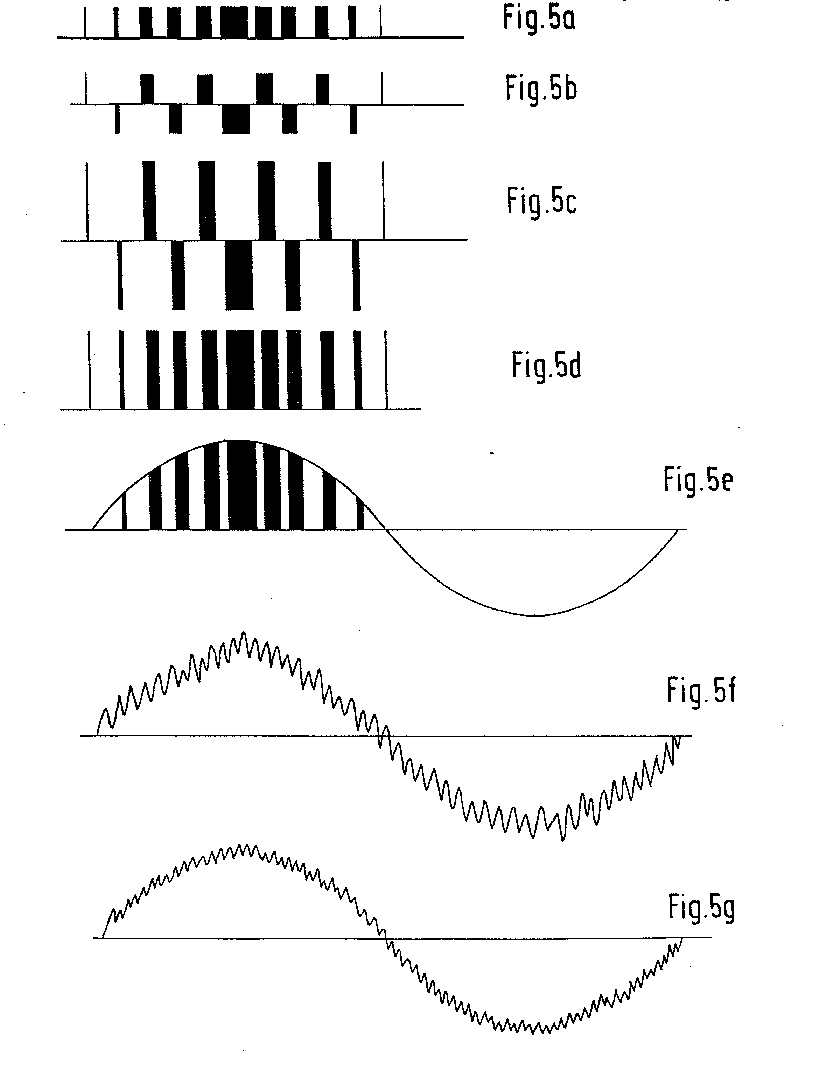

Weitere Merkmale und Vorteile der Erfindung ergeben sich aus den Patentansprüchen und der nachfolgenden Beschreibung eines Ausführungsbeispiels, das anhand der Figuren 1 - 5 beschrieben wird.

Es zeigen:

Fig. 1    ein Blockschaltbild der Schaltung zur getrennten Erzeugung der positiven und der negativen Halbwellen,

Fig. 2    ein Blockschaltbild für die Zusammenfügung der beiden Halbwellen,

Fig. 3    eine verbesserte Schaltung für die Zusammenfügung der beiden Halbwellen im Blockschaltbild,

./.

Fig. 4    die Schaltung zur Zusammenfügung der beiden
          Halbwellen gemäß Fig. 1 im Blockschaltbild,

Fig. 5    Diagramme einiger in der Schaltung gemäß

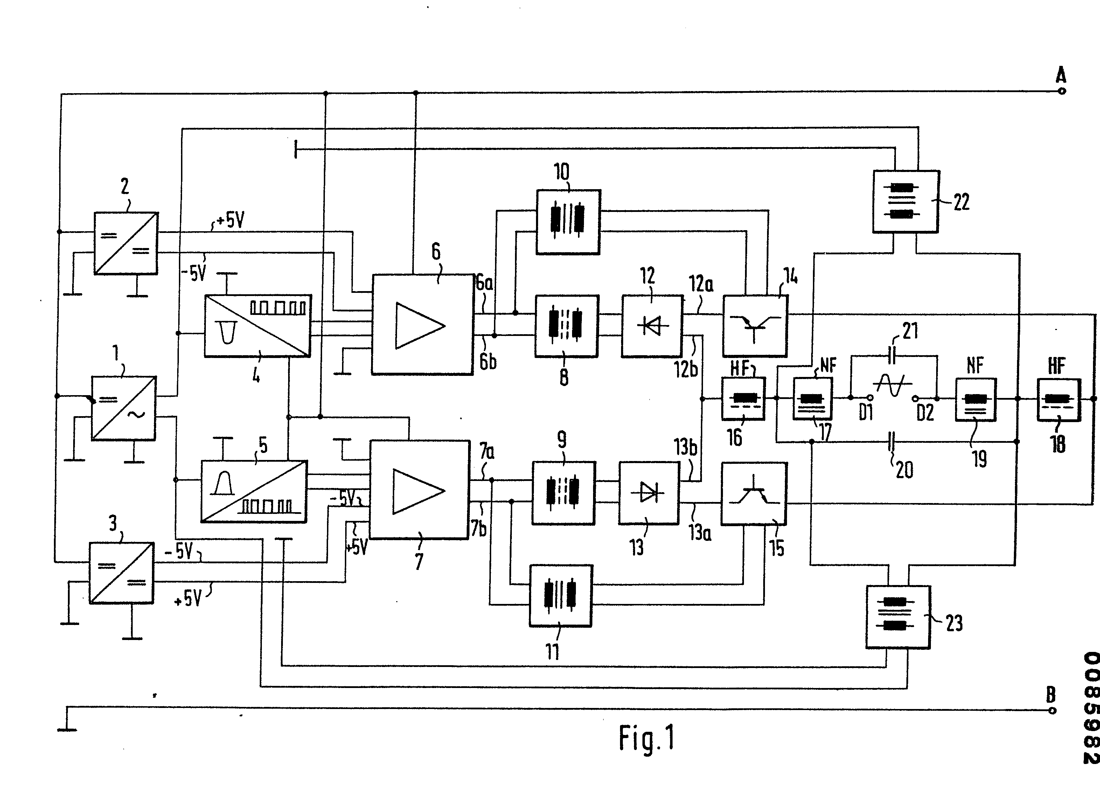

          Fig. 1 entstehenden Spannungen und Impulszüge.

Fig. 1 zeigt eine Schaltung gemäß der Erfindung zur Erzeugung einer Sinus-Wechselspannung aus der Batterie-
Gleichspannung, die an dem Plus-Eingang A und dem Minus-
Eingang B anliegt. Es ist angenommen, daß die Batteriespannung 24 V beträgt und eine Wechselspannung von 50 Hz
und 220 V erzeugt werden soll.

Wie man sieht, besteht die Schaltung der Fig. 1 aus zwei
identischen, voneinander unabhängigen Schaltungsteilen;
der obere Teil dient zur Erzeugung der negativen Sinus-
Halbwelle, während im unteren Teil die positive Sinus-
Halbwelle erzeugt wird. Im folgenden wird daher zunächst
nur die Erzeugung der negativen Sinus-Halbwelle erläutert.

Der Sinus-Generator 1 liefert die Sollwertspannung von
50 Hz, während die Gleichstromwandler 2 und 3 die Versorgungsspannung von $\pm$ 5 V für die Leistungsverstärker 6
und 7 liefern. Die Ausgangsspannung des Sinus-Generators 1
wird dem Impulsbreitenwandler 4 als Steuerspannung zugeführt, an dessen Ausgang je Halbwelle ein Impulszug mit
einer Impulsfrequenz von 20 kHz auftritt, wie in dem Diagramm 5a gezeigt ist. Das Diagramm 5a zeigt auch deutlich
die Art und Weise der Impulsbreitenregelung; die Impulse
werden bis zum Sinus-Maximum breiter, um dann wieder
schmäler zu werden. Diese Impulse gelangen zu dem Gegen-

./.

taktverstärker 6, der aus mehreren parallel geschalteten
Verstärkereinheiten bestehen kann. An den Verstärkerausgängen 6a und 6b erhält man so die in dem Diagramm 5b
dargestellten Impulszüge je Halbwelle. Der Transformator 8 wird also im Gegentakt angesteuert und kann so an
seinem Ausgang einen Impulszug gemäß Diagramm 5c liefern;
diese Impulse werden in dem Gleichrichter 12 gleichgerichtet, was in dem Diagramm 5d dargestellt ist.

Der Transistor-Schalter 14 wird von dem Verstärker 6 über den
Transformator 10 geschlossen,       solange dieser Verstärker 6
arbeitet. Am Ausgang des Transistor-Schalters 14 steht nun
ein Impulszug an, der die negative Halbwelle präsentiert.

Die Verstärker 6 und 7 können, wie oben gesagt, aus
mehreren parallelen Verstärkereinheiten bestehen. Gemäß
einer Weiterbildung der Erfindung sind alle Verstärkereinheiten  identisch aufgebaut und je auf einer steckbaren
gedruckten Schaltungskarte untergebracht. Die Anzahl dieser
Karten bestimmt die Ausgangsleistung der Verstärker 6 und 7.
Man kann daher die Ausgangsleistung variabel gestalten, indem man die entsprechende Anzahl von Schaltungskarten vorsieht. Ist also eine geringere Ausgangsleistung ausreichend
gegenüber der maximalen Bestückung, dann kann man also entsprechend weniger Schaltungskarten vorsehen, was eine Verbilligung des Wechselrichters bedeutet. Bei den bekannten
Wechselrichtern müßte man in diesem Falle vorhandene Schaltungselemente totlegen.

Die positive Halbwelle wird in dem unteren Teil der Schaltung erzeugt, und zwar in der gleichen Weise wie die negative Halbwelle, und zwar über den Impulsbreitenwandler 5,

./.

0085982

den Gegentaktverstärker 7, die Transformatoren 9 und 11,
den Gleichrichter 13 und den Transistorschalter 15. Die
beiden Gegentaktverstärker 6 und 7 arbeiten ihrerseits
ebenfalls im Gegentakt mit der vorgegebenen Frequenz
des Sinusgenerators 1.

Die Zusammenfügung der Ausgangsspannung der Transistorschalter 14 und 15 und Erzeugung der endgültigen Sinusform erfolgt im rechten Teil der Schaltung der Fig. 1.

Die Ausgänge 12b und 13b der Gleichrichter 12 und 13
sind zusammengefaßt und mit der HF-Drossel 16 verbunden;
der Ausgang der HF-Drossel 16 ist über die NF-Drossel 17
mit dem einen Lastausgang D1 verbunden.

Die Ausgänge der Transistorschalter 14 und 15 sind ebenfalls zusammengeschaltet und mit dem Eingang der HF-
Drossel 18 verbunden, deren Ausgang über die NF-Drossel 19
zu dem zweiten Lastausgang D2 führt.

Anstelle der Transistorschalter können auch sogenannte
Gleichstromssteller (Stromrichter mit Thyristoren) verwendet werden.

Mit den Glättungskondensatoren 20 und 21 erhält man LC-
Glieder 16/20 und 18/20 für die Hochfrequenz und LC-
Glieder 17/21 und 19/21 für die Niederfrequenz, so daß an
den Ausgängen D1 und D2 die Sinusspannung ansteht, die in
dem Diagramm 5e dargestellt ist.

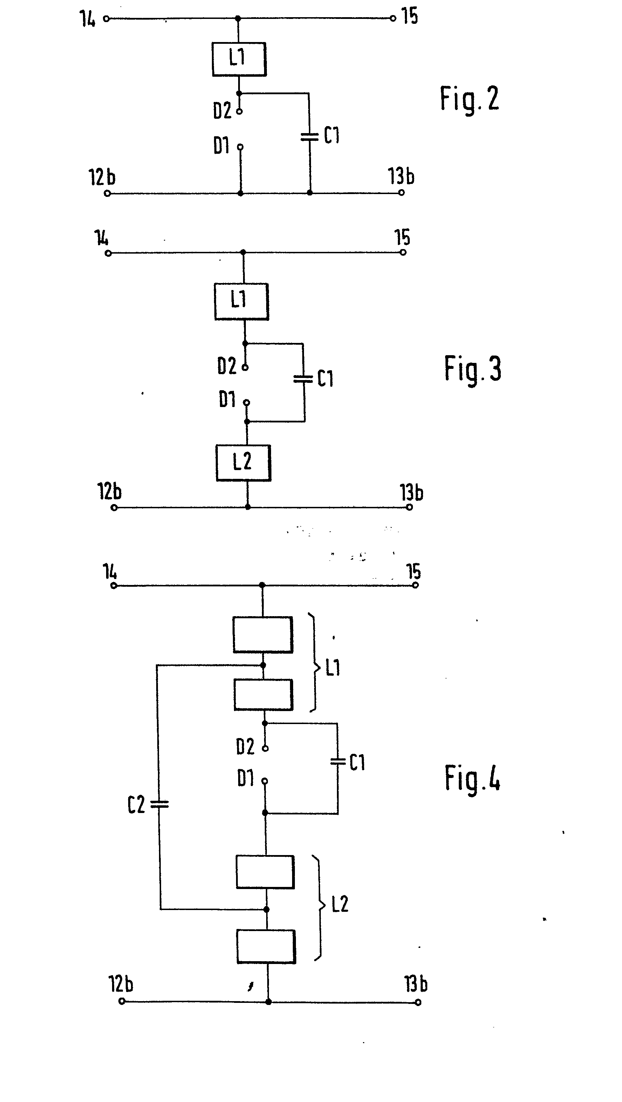

Die Schaltung der Fig. 1 stellt eine optimale Lösung dar,
die insbesondere für die Anwendung des Wechselrichters in
der Datenverarbeitung vorteilhaft ist. Bei anderen Anwendungsfällen kann die Anforderung an die Reinheit der Sinuswellen geringer sein; Fig. 2 und Fig. 3 zeigen vereinfachte
Schaltungen im Blockbild.

Gemäß Fig. 2 sind die Ausgänge 12b und 13b direkt mit
dem Lastausgang D1 und über die Kapazität C1 mit dem
Lastausgang D2 verbunden, während die Schalter 14 und
15 über die Induktivität L1 mit dem Lastausgang D2 verbunden sind. An den Lastausgängen erhält man die im Diagramm 5f dargestellte Sinus-Spannung.

Fig. 3 stellt gegenüber der Fig. 2 dahingehend eine
Änderung dar, daß auch zwischen den Ausgängen 12b/13b
und dem Lastausgang D1 die Induktivität L2 vorgesehen
ist. Damit ergibt sich die im Diagramm 5g dargestellte
Ausgangsspannung.

Fig. 4 ist eine zweite Weiterbildung gegenüber der Fig. 2,
indem die Kapazität C2 eingeführt ist und die Induktivitäten L1 und L2 jeweils in einen NF- und einen HF-Teil
aufgespalten sind, was der Schaltung gemäß Fig. 1 entspricht. Um das zu veranschaulichen, sind die Bezugszeichen der Fig. 1 übernommen und die Symbole für die
Induktivitäten und Kapazitäten in Klammern angegeben.

Die gebildete Sinusspannung wird über die Transformatoren 22
und 23 als Regelspannung für die negative bzw. positive
Halbwelle zu den Eingängen der Impulsbreitenwandler 4 und
5 zurückgeführt. In dem Impulsbreitenwandler 4 bzw. 5 wird
die Ist-Spannung mit der Sinusspannung des Sinusgebers 1
verglichen. Wenn beide Spannungen voneinander abweichen,
wird die Sinusspannung des Generators 1 in der Weise nachgeregelt, daß an den Ausgängen D1 und D2 eine konstante
Spannung ansteht.

Der Wechselrichter gemäß der Erfindung hat eine Reihe von
hervorragenden Eigenschaften, wie Messungen an einem Versuchsgerät ergeben haben. So ist der Wirkungsgrad bei
einer Batteriespannung von 24 V nahezu 90 % und bei 48 V
$> 92$ %. Der Klirrfaktor liegt unter 6 %, während die

./.

0085982

Spannungsstabilität $\pm$ 2 % zwischen Null und Vollast beträgt. Auch die Frequenzkonstanz ist sehr günstig, da sie bis zu + 80 % Außentemperatur reicht.

Ein weiterer bedeutender Vorteil der Erfindung besteht darin, daß die Parallelschaltung mehrerer Schaltungen gemäß Fig. 1 sehr einfach durchführbar ist. Die Parallelschaltung erfolgt an den Eingängen der Impulsbreitenwandler 4 und 5 sowie an den Lastausgängen D1 und D2.

Es ist zu erkennen, daß sowohl die Frequenz als auch die Form der Ausgangsspannung leicht geändert werden kann. Zu diesem Zwecke braucht man nur anstelle des Sinusgenerators 1 einen entsprechenden anderen Generator vorzusehen; alle anderen Schaltungselemente können im Prinzip unverändert übernommen werden.

Patentansprüche

1. Getakteter modulierter Wechselrichter zur Umwandlung einer Gleichspannung in eine Spannung beliebiger Form und Frequenz, bei dem die
Taktspannung zur Steuerung eines Impulsbreitenmodulators dient,
dessen Ausgangsspannung den Umwandlerverstärker steuert, dadurch
gekennzeichnet, daß zwei identische, voneinander unabhängige Schaltungen vorgesehen sind, die zur getrennten Erzeugung der negativen
und der positiven Halbwellen dienen .

2. Wechselrichter nach Anspruch 1, dadurch gekennzeichnet, daß die
beiden Schaltungen zur Erzeugung der negativen und der positiven
Halbwellen je aus folgenden hintereinander geschalteten Elementen
bestehen:
Impulsbreitenwandler (4, 5), die von dem gemeinsamen Taktgeber (1)
gesteuert werden, Leistungsverstärker (6, 7), denen die umzuwandelnde
Gleichspannung und die modulierte Taktspannung zugeführt wird, Transformator (8, 9) zum Transformieren der Verstärkerausgangsspannung,
Gleichrichter (12, 13), deren Ausgänge (12a, 13a) mit den Eingängen
der Schalter (14, 15) und deren Ausgänge (12b, 13b) parallel mit dem
Lastausgang (D1) und über die Kapazität (C) mit dem Lastausgang (D2)
verbunden sind, Schalter (14, 15) die abwechselnd im Takte der Leistungsverstärker (6, 7) geöffnet werden und deren Ausgänge parallel
über eine Induktivität (L1) mit dem Lastausgang (D2) verbunden sind.

3. Getakteter modulierter Wechselrichter nach Anspruch 1 und 2, dadurch
gekennzeichnet, daß zur Erzeugung einer Sinusausgangsspannung als
Taktgeber ein Sinusgeber (1) vorgesehen ist.

4. Getakteter modulierter Wechselrichter nach Anspruch 1 bis 3,
dadurch gekennzeichnet, daß zwischen den parallelen Ausgängen (12b,
13b) der Gleichrichter (12, 13) und dem Lastausgang (D1) die Induktivität (L2) vorgesehen ist.

5. Getakteter modulierter Wechselrichter nach Anspruch 1 bis 4, dadurch gekennzeichnet, daß die Induktivitäten (L1, L2) je in eine HF-Drossel (16, 18) und eine NF-Drossel (17, 19) aufgeteilt und die Verbindungspunkte jeweils beider Teile über die Kapazität (20) miteinander verbunden sind.

6. Getakteter modulierter Wechselrichter nach Anspruch 1 und 2, dadurch gekennzeichnet, daß Transformatoren (10, 11) an den Ausgängen der Leistungsverstärker (6, 7) vorgesehen sind, deren Ausgangsspannungen zum Schliessen der Schalter (14, 15) dienen.

7. Getakteter modulierter Wechselrichter nach Anspruch 1 bis 6, dadurch gekennzeichnet, daß an den Ausgängen der HF-Drosseln (16, 18) Transformatoren (22, 23) angeschaltet sind, die eine Regelspannung erzeugen, die den Eingängen der Impulsbreitenwandler (4, 5) zur Regelung der Takspannung des Generators (1) dient.

8. Getakteter modulierter Wechselrichter nach einem oder mehreren der vorhergehenden Ansprüche, dadurch gekennzeichnet, daß die Schalter (14, 15) Transistorschalter sind.

9. Getakteter modulierter Wechselrichter nach einem oder mehreren der vorhergehenden Ansprüche, dadurch gekennzeichnet, daß die Schalter (14, 15) Gleichstromsteller sind.

Fig.1

2/3                    0085982

Fig. 2

Fig. 3

Fig. 4

0085982

Fig.5a

Fig.5b

Fig.5c

Fig.5d

Fig.5e

Fig.5f

Fig.5g